# EUROPEAN PATENT SPECIFICATION

(11) **EP 3 633 001 B1**
(45) Date of publication and mention of the grant of the patent: **17.03.2021**
(21) Application number: 18808794.4
(22) Date of filing: 21.05.2018
(51) Int. Cl.: C09D 175/06, C08G 18/42, C09D 5/16, C09D 7/41, C08G 18/22, C08G 18/75, C08G 18/76, C08L 75/06

(54) **ANTIFOULING COATING COMPOSITION, AND COATED ARTICLE HAVING ANTIFOULING COATING FILM FORMED USING SAID COMPOSITION ON SURFACE**
BEWUCHSHEMMENDE BESCHICHTUNGSZUSAMMENSETZUNG UND BESCHICHTETER GEGENSTAND MIT EINER UNTER VERWENDUNG DER ZUSAMMENSETZUNG GEBILDETEN BEWUCHSHEMMENDEN BESCHICHTUNG AUF DER OBERFLÄCHE
COMPOSITION DE REVÊTEMENT ANTISALISSURE, ET ARTICLE REVÊTU AYANT UN FILM DE REVÊTEMENT ANTISALISSURE FORMÉ EN UTILISANT LADITE COMPOSITION SUR LA SURFACE

(30) Priority: 01.06.2017 JP 2017108990
(43) Date of publication of application: 08.04.2020
(73) Proprietor: Nitto Kasei Co., Ltd., Osaka-shi Osaka 533-0031 (JP)
(72) Inventor: MITOMI, Daisuke, Osaka-shi Osaka 533-0031 (JP)
(74) Representative: Gulde & Partner
(86) International application number: PCT/JP2018/019468
(87) International publication number: WO 2018/221289

(56) References cited:
- JP-A- H11 302 354
- JP-A- 2004 059 903
- JP-A- 2013 001 897
- JP-A- 2013 142 105
- KR-A- 20160 143 662

## Description

### TECHNICAL FIELD

The present invention relates to an antifouling coating composition, and to a coated object having on its surface an antifouling coating film formed using the composition.

### BACKGROUND

Aquatic fouling organisms such as barnacles, tubeworms, common mussels, *Bugula neritina,* sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems caused by adhesion of living organisms, a so-called antifouling coating for preventing adhesion of living organisms is applied on the surface of underwater objects. In the conventional antifouling coatings, the resin which forms the coating film do not dissolve in the seawater, and only the antifouling agent dissolved in the seawater, thereby preventing adhesion of living organisms in seawater. Such antifouling coating showed superior initial antifouling effect, however, after the antifouling agent dissolved, only the coating film with scarce antifouling effect was left, and thus the antifouling effect in long term was insufficient. An example of a conventional antifouling coating composition is disclosed in Patent Literature 9. The composition comprises a polyurethane resin obtained by reaction of a polyether polyol, polyester polyol or polyester-polyether polyol with an isocyanate compound; and an antifouling agent.

Recently, a so-called hydrolysable self-polishing antifouling coating has been used in place of the afore-mentioned antifouling coating. In the hydrolysable self-polishing antifouling coating, both of the resin forming the coating film and the antifouling agent dissolve in the seawater. In such antifouling coating, the surface of the coating film is dissolved, thereby always maintaining active antifouling coating film surface. Accordingly, antifouling effect is sustained.

Polyester resin is formed by esterification, via dehydration condensation of acid and alcohol. Therefore, polyester is prone to hydrolysis, and development has been made to utilize polyester as the hydrolysable self-polishing antifouling coating resin.

For example, Patent Literature 1 discloses an antifouling coating using as a hydrolysable resin an aliphatic polyester obtained by copolymerizing one or more of glycerin, ethylene glycol and 1,4-butanediol with a polyester comprising succinic acid and 1,2-propylene glycol. Patent Literature 2 discloses an antifouling coating including a hydrolysable polyester resin obtained by reacting oxyacid such as lactic acid, polycarboxylic acid not containing hydroxyl group, and polyalcohol. Patent Literature 3 discloses a hydrolysable polyester resin for an antifouling coating having as its main component an aliphatic polyester containing a metal salt of hydroxy carboxylic acid. Patent Literature 4 discloses that a polyester resin for antifouling coating, having superior coating characteristics with adequate hydrolysis speed can be obtained by copolymerizing di-carboxylic acids having 2 to 40 carbon atoms, glycols having 2 to 40 carbon atoms with glycolic acid, lactic acid, caprolactone and the like. Patent Literature 5 discloses a hydrolysable polyester resin for antifouling coating comprising glycol having as its main component at least one of phthalic acid, isophthalic acid and terephthalic acid; and diethylene glycol. Patent Literature 10 discloses a hydrolysable antifouling paint composition comprising a polyester resin, a silane ester olefin resin, and an antifouling composition.

Further, in Patent Literature 6, an antifouling coating composition including a resin having an acid value of 20 to 400 mg KOH/g, metal containing antifouling agent, and a monobasic acid compound having a carboxylic group is disclosed. Patent Literature 7 discloses an antifouling coating composition comprising a hydrolysable polyester having carboxylic group on both terminals. Patent Literature 8 discloses an antifouling coating composition comprising a resin obtained by reacting acrylic resin with a metal oxide with a valence of two or greater, a polyester resin having an acid value of 50 to 200 mg KOH/g, and an antifouling agent.

### CITATION LIST

### PATENT LITERATURE

[Patent Literature 1] JP-A-Hei 7-166106
[Patent Literature 2] JP-A-Hei 7-082513
[Patent Literature 3] JP-A-Hei 8-176501
[Patent Literature 4] JP-A-Hei 7-53899
[Patent Literature 5] JP-A-2010-95585
[Patent Literature 6] JP-A-Hei 9-132736
[Patent Literature 7] JP-A-Hei 11-255869
[Patent Literature 8] JP-A-2000-248206
[Patent Literature 9] JP-A-2004-59903
[Patent Literature 10] KR-A-10-2016-0143662

### SUMMARY OF INVENTION

### TECHNICAL PROBLEM

However, in the afore-mentioned Patent Literatures 1 to 8, none of the hydrolysable self-polishing antifouling coating was able to maintain stable film dissolution speed for a long period of time, and maintain stable antifouling performance without occurrence of defects such as cracks in the coating film.

The present invention has been made by taking the afore-mentioned circumstances into consideration. The present invention provides an antifouling coating composition which can maintain stable film dissolution speed for a long period of time in seawater, and can maintain stable antifouling performance without occurrence of defects such as cracks in the coating film.

### SOLUTION TO PROBLEM

According to the present invention, provided is an antifouling coating composition comprising: a polyester urethane resin (A); and an antifouling agent (B); wherein: the polyester urethane resin (A) is a product obtained by urethanization reaction of a polyester polyol (a) and an isocyanate compound (b); and the polyester polyol (a) is represented by a formula (1) or a formula (2).

### ADVANTAGEOUS EFFECTS OF THE INVENTION

The present inventors have conducted intensive studies, and have found that when polyester polyurethane resin obtained by conducting urethanization reaction with polyester polyol having a particular structure represented by the formula (1) or the formula (2) is contained, the antifouling coating composition can maintain stable film dissolution speed for a long period of time in seawater, and can maintain stable antifouling performance without occurrence of defects such as cracks in the coating film, thereby completing the present invention.

### MODE FOR CARRYING OUT THE INVENTION

Hereinafter, the present invention will be described in detail.

### 1. antifouling coating composition

The antifouling coating composition of the present invention comprises a polyester urethane resin (A) and an antifouling agent (B) .

### 1-1. polyester urethane resin (A)

### <structure of polyester urethane resin (A)>

The polyester urethane resin (A) of the present invention is obtained by conducting urethanization reaction with polyester polyol (a) and isocyanate compound (b).

### (structure of polyester polyol (a))

Polyester polyol (a) can be represented by the following formula (1) or formula (2).

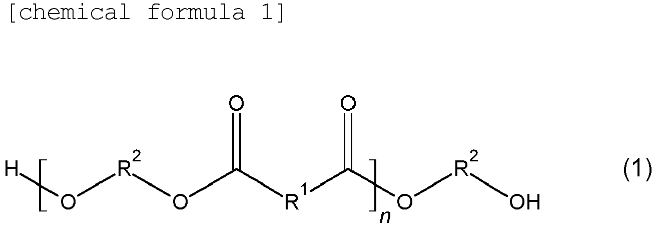

In the formula (1), n represents an integer of 1 to 100, preferably 3 to 50, and more preferably 5 to 30. Particularly for example, n represents 1, 3, 5, 10, 15, 20, 25, 30, 35, 40, 45, 50, 60, 70, 80, 90, or 100, and can be in the range between the two values exemplified herein.

R¹ provided by number of n can be the same or can be different from each other, and a part of or all of R¹ provided by number of n is a linear alkylene group or a branched alkylene group being branched at a position other than the α-position and the β-position (hereinafter referred to as "center branched alkylene group"). Number of carbon atoms contained in R¹ is 1 to 20 for example, and is preferably 2 to 12. Number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.

Preferably, all of R¹ provided by number of n are linear alkylene group or center branched alkylene groups, however, a part of R¹ can be a branched alkylene group being branched at least either one of the α-position and the β-position (hereinafter referred to as "terminal branched alkylene group"), or can be a substituent group other than the alkylene group. As the substituent group other than the alkylene group, aliphatic hydrocarbon groups other than the alkylene group and aromatic hydrocarbon groups can be mentioned for example.

As the linear alkylene group, methylene group, ethylene group, n-propylene group, n-butylene group, n-pentylene group, n-hexylene group, n-heptylene group, n-octylene group, n-nonylene group, n-dexylene group and the like can be mentioned.

As the center branched alkylene group, 3-methyl-n-pentylene group, 3-ethyl-n-pentylene group, 3,4-dimethyl-n-hexylene group and the like can be mentioned.

As the terminal branched alkylene group, neopentylene group and the like can be mentioned.

The ratio of the total number of the linear alkylene group and the center branched alkylene group against the number of R¹ (n) is preferably 30% or higher, more preferably 50% or higher, and further preferably 70% or higher. This ratio is, particularly for example, 30, 40, 50, 60, 70, 80, 90, or 100%, and can be in the range between the two values exemplified herein.

R² provided by number of (n+1) can be the same as or different from each other, and a part of or all of R² provided by number of (n+1) is a linear alkylene group or a center branched alkylene group. Number of carbon atoms contained in R² is 1 to 20 for example, and is preferably 2 to 12. Number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.

Preferably, all of R² provided by number of (n+1) are linear alkylene groups or center branched alkylene groups, however, a part of R² can be a terminal branched alkylene group, or can be a substituent group other than the alkylene group. As the substituent group other than the alkylene group, aliphatic hydrocarbon groups other than the alkylene group and aromatic hydrocarbon groups can be mentioned for example.

Examples of the linear alkylene group, the center branched alkylene group, and the terminal branched alkylene group are the same as R¹.

The ratio of the total number of the linear alkylene group and the center branched alkylene group against the number of R² (n+1) is preferably 30% or higher, more preferably 50% or higher, and further preferably 70% or higher. This ratio is, particularly for example, 30, 40, 50, 60, 70, 80, 90, or 100%, and can be in the range between the two values exemplified herein.

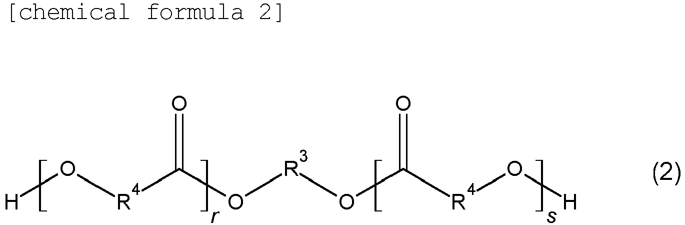

In the formula (2), r and s each represents an integer of 0 to 100, and satisfy the formula of r+s ≥ 1. Each of r and s is preferably 1 to 100, more preferably 3 to 50, and further preferably 5 to 30. Each of r and s is, particularly for example, 0, 1, 3, 5, 10, 15, 20, 25, 30, 35, 40, 45, 50, 60, 70, 80, 90, or 100, and can be in the range between the two values exemplified herein.

R³ is an alkylene group, and can be a linear alkylene group or a branched alkylene group. When R³ is a branched alkylene group, the branching position is not particularly limited, and can be a center branched alkylene group or a terminal branched alkylene group. Number of carbon atoms contained in R³ is 1 to 20 for example, and is preferably 2 to 12. Number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.

R⁴ provided by number of (r+s) can be the same as or different from each other. R⁴ can be a linear alkylene group or a center branched alkylene group. Number of carbon atoms contained in R⁴ is 1 to 20 for example, and is preferably 2 to 12. Number of carbon atoms is, particularly for example, 1, 2, 3, 4, 5, 6, 7, 8, 9, 10, 11, 12, 13, 14, 15, 16, 17, 18, 19, or 20, and can be in the range between the two values exemplified herein.

Examples of the linear alkylene group, the center branched alkylene group, and the terminal branched alkylene group are the same as R¹.

The weight average molecular weight (Mw) of the polyester polyol (a) is preferably 1,000 to 30,000, more preferably 2,000 to 20,000. Mw is, particularly for example, 1,000, 2,000, 3,000, 4,000, 5,000, 6,000, 7,000, 8,000, 9,000, 10,000, 15,000, 20,000, 25,000, or 30,000, and can be in the range between the two values exemplified herein. As the method for measuring Mw, gel permeation chromatography (GPC) can be mentioned for example.

The number average molecular weight (Mn) of the polyester polyol (a) is preferably 500 to 15,000, more preferably 1,000 to 10,000. Mn is, particularly for example, 500, 1,000, 2,000, 3,000, 4,000, 5,000, 6,000, 7,000, 8,000, 9,000, 10,000, or 15,000, and can be in the range between the two values exemplified herein. As the method for measuring Mn, gel permeation chromatography (GPC) can be mentioned for example. In addition, Mn can be calculated from the hydroxyl value of the polyester polyol. In such case, Mn can be calculated from the following formula.

Mn = 56.11 x N x 1000/hydroxyl value of polyester polyol (a)

N : valence of polyalcohol
hydroxyl value : value measured in accordance with Standard Methods for the Analysis of Fats, Oils and Related Materials 2.3.6.2-1996, established by Japan Oil Chemists' Society

The hydroxyl value of the polyester polyol (a) was measured in accordance with the afore-mentioned method, and is preferably 5 to 300 mg KOH/g, more preferably 10 to 200 mg KOH/g. The hydroxyl value is, particularly for example, 5, 10, 20, 30, 40, 50, 60, 70, 80, 90, 100, 110, 120, 130, 140, 150, 200, 250, or 300 mg KOH/g, and can be in the range between the two values exemplified herein.

The acid value of the polyester polyol (a) is measured in accordance with Standard Methods for the Analysis of Fats, Oils and Related Materials 2.3.1-2013, established by Japan Oil Chemists' Society. The acid value is preferably 2 mg KOH/g or lower, more preferably 0.5 mg KOH/g or lower. The acid value is 0.01 to 2 mg KOH/g for example, and is particularly for example, 0.01, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, or 2 mg KOH/g, and can be in the range between the two values exemplified herein.

As the polyester polyol (a), a commercially available polyester polyol can be used. Here, TL 2464 (product name, available from Hitachi Chemical Co., Ltd.), NIPPOLAN 163 (product name, available from Tosoh Corporation), HS2P-103S (product name, available from Hokoku Corporation), and KURARAY POLYOL P-2010 (product name, available from Kuraray Co., Ltd.) can be mentioned.

### (manufacture of polyester polyol (a))

Polyester polyol (a) of the formula (1) can be manufactured, for example, by esterification reaction or ester exchange reaction of an acid component and polyalcohol. Polyester polyol (a) of the formula (2) can be manufactured, for example, by a ring-opening polymerization reaction of a lactone compound. Polyester polyol (a) can be obtained as a reaction product.

### (a) esterification reaction or ester exchange reaction

In this method, polyester polyol (a) is manufactured by first formulating acid component and polyalcohol, and then performing esterification reaction or ester exchange reaction in the presence of catalyst such as organic titanium compound or organic tin compound at 180 to 250°C by known manufacturing method, such as melting method, solvent method (reflux method) using solvent such as toluene, xylene and the like.

The acid component of the esterification reaction includes dicarboxylic acid represented by the following formula (2) and derivatives thereof (hereinafter referred to as "specific acid component"). All of the acid component can be the specific acid component, or a part of the acid component can be the specific acid component.

HOOC-R¹-COOH (2)

As the particular examples of the specific acid component, succinic acid, malonic acid, adipic acid, sebacic acid, azelaic acid, lower alkyl esters thereof (C1 to C4 alkyl esters for example), anhydrides thereof, and derivatives such as acyl halides can be mentioned.

As the acid component other than the specific acid component, dicarboxylic acid such as oxalic acid, maleic acid, fumaric acid, and citraconic acid; aromatic dicarboxylic acid such as phthalic acid, isophthalic acid, and terephthalic acid; alicyclic dicarboxylic acid such as cyclohexane dicarboxylic acid; mixtures of dimer acid and the like; polycarboxylic acid with a valence of 3 or greater such as trimellitic acid and pyromellitic acid; lower alkyl esters there of (C1 to C4 alkyl esters for example), anhydrides thereof, and derivatives such as acyl halides can be mentioned.

These acid components can be used alone or two or more of these can be used in combination.

The molar ratio of the specific acid component against the total acid component is preferably 30% or higher, more preferably 50% or higher, and further preferably 70% or higher. The ratio is, particularly for example, 30, 40, 50, 60, 70, 80, 90, or 100%, and can be in the range between the two values exemplified herein.

The polyalcohol used in the esterification reaction includes diol compound represented by the following formula (3) (hereinafter referred to as "specific diol compound"). All of the polyalcohol can be the specific diol compound, or a part of the polyalcohol can be the specific diol compound.

HO-R²-OH (3)

As the specific diol compound, ethylene glycol, 1,3-propanediol, 1,4-butanediol, 1,5-pentanediol, 1,6-hexanediol, 3-methyl-1,5-pentanediol, and 1,9-nonanediol can be mentioned.

As the polyalcohol other than the specific diol compound, polyalcohol with a valence of two or greater such as 1,2-propanediol, 1,3-butanediol, 1,2-butanediol, neopentyl glycol, diethylene glycol, triethylene glycol, 1,4-cyclohexanediol, 1,4-cyclohexanedimethanol, 2-methyl-1,8-octanediol, 2-methyl-1,3-propanediol, 2,2-diethyl-1,3-propanediol, 2-butyl-2-ethyl-1,3-propanediol, 2-ethyl-1,3-hexanediol, 2,4-diethyl-1,5-pentanediol, bisphenol A, hydrogenated bisphenol A, ethylene oxide adduct or propylene oxide adduct of bisphenol A or hydrogenated bisphenol A, trimethylolethane, trimethylolpropane, glycerin, and pentaerythritol can be mentioned.

These alcohols can be used alone or two or more of these can be used in combination.

The molar ratio of the specific diol compound against the total polyalcohol is preferably 30% or higher, more preferably 50% or higher, and further preferably 70% or higher. The ratio is, particularly for example, 30, 40, 50, 60, 70, 80, 90, or 100%, and can be in the range between the two values exemplified herein.

### (b) ring-opening polymerization reaction of lactone compound

In this method, polyester polyol (a) is manufactured by first formulating lactone compound and polyalcohol as the initiator, and then performing ring-opening polymerization reaction in the presence of catalyst such as organic titanium compound or organic tin compound at 130 to 220°C by known manufacturing method.

As the lactone compound, *ε*-caprolactone, δ-valerolactone, γ-butyrolactone, β-propiolactone, and α-acetolactone can be mentioned. Cyclic ester such as lactide which can polymerize with the lactone compound can be contained. Preferably, the lactone compound is *ε-*caprolactone or δ-valerolactone. These lactone compounds can be used alone or two or more of these can be used in combination.

Polyalcohol includes diol compound represented by the following formula (5).

HO-R³-OH (5)

As the diol compound, ethylene glycol, 1,3-propanediol, 1,4-butanediol, 1,5-pentanediol, 1,6-hexanediol, 3-methyl-1,5-pentanediol, 1,9-nonanediol, 1,2-propanediol, 1,3-butanediol, 1,2-butanediol, neopentyl glycol, diethylene glycol, triethylene glycol, 1,4-cyclohexanediol, 1,4-cyclohexanedimethanol, 2-methyl-1,8-octanediol, 2-methyl-1,3-propanediol, 2,2-diethyl-1,3-propanediol, 2-butyl-2-ethyl-1,3-propanediol, 2-ethyl-1,3-hexanediol, and 2,4-diethyl-1,5-pentanediol can be mentioned.

As the polyalcohol other than the diol compound, polyalcohol with a valence of two or greater such as bisphenol A, hydrogenated bisphenol A, ethylene oxide adduct or propylene oxide adduct of bisphenol A or hydrogenated bisphenol A, trimethylolethane, trimethylolpropane, glycerin, and pentaerythritol can be mentioned.

### (isocyanate compound (b))

As the isocyanate compound (b), alkylene diisocyanate such as trimethylene diisocyanate, trimethylhexamethylene diisocyanate, tetramethylene diisocyanate, and hexamethylene diisocyanate; cycloalkylene diisocyanate such as bis (isocyanatomethyl) cyclohexane, cyclopentane diisocyanate, cyclohexane diisocyanate, and isophorone diisocyanate; aromatic diisocyanate such as tolylene diisocyanate, phenylene diisocyanate, diphenylmethane diisocyanate, and diphenylether diisocyanate; aromatic-aliphatic diisocyanate such as xylylene diisocyanate and diisocyanate diethylbenzene; triisocyanate such as triphenylmethane triisocyanate, triisocyanate benzene, and triisocyanate toluene; tetraisocyanate such as diphenyldimethylmethane tetraisocyanate; polyisocyanate such as dimer and trimer of isocyanate, such as uretdione, allophanate, trimethylolpropane adduct, isocyanurate product, and biuret product of hexamethylene diisocyanate, tolylene diisocyanate, isophorone diisocyanate and the like; can be mentioned. Here, hexamethylene diisocyanate, cyclohexane diisocyanate, isophorone diisocyanate, tolylene diisocyanate, and diphenylmethane diisocyanate are preferable. These isocyanate compounds can be used alone, or two or more of these can be used in combination.

### <Manufacturing method of polyester urethane resin (A)>

Regarding the manufacturing method of polyester urethane resin (A) for example, the polyester polyol (a) and the isocyanate compound (b) are blended, and the mixture is subjected to urethanization reaction at 20 to 140°C. The urethanization reaction can be performed when the antifouling coating composition is manufactured.

The reaction can be performed in the presence of a known curing catalyst. As the known curing catalyst, organic metal catalyst such as stannas octoate, dibutyltin dilaurate, dibutyltin diacetate, dioctyltin dilaurate, lead octoate, lead naphthenate, nickel octoate, cobalt octoate, and iron octoate; tertiary amine compound, and quaternary ammonium salt compound can be mentioned.

Formulation ratio of the polyester polyol (a) and the isocyanate compound (b) in the manufacturing method is not particularly limited. Here, isocyanate index (isocyanate group / active hydrogen group capable of reacting with isocyanate group) is preferably in the range of 0.2 to 1.0. The isocyanate index is more preferably in the range of 0.4 to 0.9.

Weight average molecular weight (Mw) of the polyester urethane resin (A) is preferably 4,000 to 100,000, and especially preferably 10,000 to 60,000. When the Mw is in the range of 10,000 to 60,000, the coating film would not be weak, and the dissolving of the coating film would be adequate, thereby achieving desired antifouling effect sufficiently. As the method for measuring Mw, gel permeation chromatography (GPC) can be mentioned for example.

The content of polyester urethane resin (A) in the composition of the present invention is not particularly limited. Here, the content in the solids of the composition of the present invention is usually 2 to 50 mass%, preferably 4 to 25 mass%. When the content of polyester urethane resin (A) is 4 mass% to 25 mass%, adequate film dissolution speed and film property in seawater can be achieved, stable surface renewal property can be maintained for a long period of time, and thus desired antifouling effect can be realized sufficiently. In addition, superior recoating property of the coating film can be realized.

### 1-2. antifouling agent (B)

As the antifouling agent (B), there is no particular limitation so long as it is a substance having a killing or repellent effect to marine fouling organisms. For example, an inorganic chemical and an organic chemical can be mentioned.

As the inorganic chemical for example, cuprous oxide, cuprous thiocyanate (generic name: copper rhodanide), cupro-nickel, copper powder and the like can be mentioned. Among these, cuprous oxide and copper rhodanide are particularly preferable.

As the organic chemical for example, organic copper compounds such as copper 2-mercaptopyridine-N-oxide (generic name: copper pyrithione) and the like; organic zinc compounds such as zinc 2-mercaptopyridine-N-oxide (generic name: zinc pyrithione), zinc ethylenebis(dithiocarbamate) (generic name: zineb), zinc bis(dimethyldithiocarbamate) (generic name: ziram), bis(dimethyldithiocarbamate) ethylenebis(dithiocarbamate)dizinc (generic name: polycarbamate) and the like; organic boron compounds such as pyridine-triphenylborane, 4-isopropylpyridine-diphenylmethylborane, 4-phenylpyridine-diphenylborane, triphenylboron-n-octadecylamine, triphenyl[3-(2-ethylhexyloxy)propylamine]boron and the like; maleimide compounds such as 2,4,6-trichloromaleimide, N-(2,6-diethylphenyl) 2,3-dichloromaleimide and the like; and other compounds such as 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2,4,5,6-tetrachloroisophthalonitrile (generic name: Chlorothalonil), N-dichlorofluoromethylthio-N',N'-dimethyl-N-p-tolylsulfamide (generic name: Tolylfluanid), N-dichloromethylthio-N',N'-dimethyl-N-phenylsulfamide (generic name: Dichlofluanid), 2-(4-thiazolyl)benzimidazole (generic name: Thiabendazole), 3-(benzo[b]thien-2-yl)-5,6-dihydro-1,4,2-oxathiazine-4-oxide (generic name: Bethoxazin), 2-(p-chlorophenyl)-3-cyano-4-bromo-5-trifluoromethyl pyrrole (generic name: ECONEA 028), (±)-4-[1-(2,3-dimethylphenyl)ethyl]-1H-imidazole (generic name: Medetomidine) and the like can be mentioned. Among these, zinc pyrithione, copper pyrithione, pyridine-triphenylborane, 4-isopropylpyridine-diphenylmethylborane, Bethoxazin, Zineb, Sea-nine 211, and Irgarol 1051 are preferable, and copper pyrithione, zinc pyrithione, pyridine-triphenylborane, and Bethoxazin are more preferable.

As the antifouling agent (B), cuprous oxide, copper rhodanide, zinc pyrithione, copper pyrithione, pyridine-triphenylborane, 4-isopropylpyridine-diphenylmethylborane, Bethoxazin, Zineb, Sea-nine 211, Irgarol 1051, Tolylfluanid, and Dichlofluanid are preferable, and cuprous oxide, copper pyrithione, zinc pyrithione, pyridine-triphenylborane, and Bethoxazin are more preferable.

These antifouling agents can be used alone or two or more of these can be used in combination.

The content of the antifouling agent (B) in the composition of the present invention is not particularly limited. Here, the content in the solids of the composition of the present invention is usually 0.1 to 75 mass%, preferably 1 to 60 mass%. When the content of the antifouling agent (B) is less than 0.1 mass%, sufficient antifouling effect may not be achieved. When the content of the antifouling agent (B) exceeds 75 mass%, the coating film formed would become weak, and the adhesion property with the object onto which the coating film is formed would become weak. Therefore, function as the antifouling coating film cannot be fully realized.

The antifouling coating composition of the present invention can further contain a release modifier (C), a plasticizer (D), and other resin (D) in addition to the polyester urethane resin (A) and the antifouling agent (B) if necessary. Accordingly, the antifouling coating composition can exhibit further superior antifouling effect.

### 1-3. release modifier (C)

As the release modifier (C) for example, rosin, rosin derivative, and metal salts thereof, monocarboxylic acid and salt thereof, or alicyclic hydrocarbon resin and the like can be mentioned.

As the rosin, tall oil rosin, gum rosin, wood rosin and the like can be exemplified. As the rosin derivative, hydrogenated rosin, disproportionated rosin, maleic acid modified rosin, formylated rosin, polymerized rosin and the like can be exemplified. Reactant of metal compound and rosin can be used as the metal salt of rosin and metal salt of rosin derivative. As the metal salt of rosin for example, gum rosin zinc (or copper) salt, wood rosin zinc (or copper) salt, tall oil rosin zinc (or copper) salt and the like can be mentioned. As the metal salt of rosin derivative, hydrogenated rosin zinc (or copper) salt, disproportionated rosin zinc (or copper) salt, maleic acid modified rosin zinc (or copper) salt, formylated rosin zinc (or copper) salt, polymerized rosin zinc (or copper) salt and the like can be mentioned.

As the monocarboxylic acid for example, fatty acid having approximately 5 to 30 carbon atoms, synthetic fatty acid, naphthenic acid and the like can be mentioned. As the salt of monocarboxylic acid, copper salt, zinc salt, magnesium salt, calcium salt and the like can be mentioned.

As the alicyclic hydrocarbon resin, Quintone 1500, Quintone 1525L, and Quintone 1700 (product name, available from Zeon Corporation) and the like can be mentioned as commercially available product for example.

Especially, in terms of providing adequate release enhancing property, the composition of the present preferably comprises at least one selected from rosin, rosin derivative, and metal salts thereof as the release modifier (C). Further, in terms of improving crack resistance and water resistance, the composition preferably comprises copper salt or zinc salt of rosin or rosin derivative.

The content of release modifier (C) in the composition of the present invention is usually 1 to 80 parts by mass, preferably 10 to 50 parts by mass with respect to 100 parts by mass of the polyester urethane resin (A). When the content of release modifier (C) is less than 1 part by mass, effect for preventing adhesion of aquatic fouling organisms, especially during the anchorage period, cannot be exhibited sufficiently. When the content of release modifier (C) exceeds 80 parts by mass, defects in the coating film such as cracks and delamination tend to occur, thereby being unable to exhibit sufficient effect for preventing adhesion of aquatic fouling organisms. The content of the release modifier (C) is for example, 1, 5, 10, 15, 20, 25, 30, 35, 40, 45, 50, 55, 60, 65, 70, 75, or 80 parts by mass with respect to 100 parts by mass of the polyester urethane resin (A), and can be in the range between the two values exemplified herein.

### 1-4. plasticizer (D)

By allowing the antifouling coating composition of the present invention to include a plasticizer (D), plasticity of the composition can be improved, thereby allowing to suitably form a tough coating film.

As the plasticizer (D) for example, phosphate ester such as tricresyl phosphate, trioctyl phosphate, and triphenyl phosphate; phthalic acid ester such as dibutyl phthalate and dioctyl phthalate; adipic acid ester such as dibutyl adipate and dioctyl adipate; sebacic acid ester such as dibutyl sebacate and dioctyl sebacate; epoxidized fat such as epoxidized soybean oil and epoxidized linseed oil; alkyl vinyl ether polymer such as methyl vinyl ether polymer and ethyl vinyl ether polymer; polyalkylene glycol such as polyethylene glycol and polypropylene glycol; t-nonyl pentasulfide, petrolatum, polybutene, trimellitic acid tris (2-ethylhexyl), liquid paraffin, chlorinated paraffin and the like can be mentioned. These plasticizers can be used alone, or two or more of these can be used in combination.

The content of plasticizer (D) in the composition of the present invention is usually 0.1 to 20 parts by mass, preferably 0.5 to 10 parts by mass with respect to 100 parts by mass of the polyester urethane resin (A).

### 1-5. other resin (E)

By allowing the antifouling coating composition of the present invention to include other resin (E), cost can be reduced without deteriorating the effect of the present invention. In addition, synergistic effect with the property of the resin (E) can be obtained.

As the other resin (E) for example, (meth)acrylic resin, alkyd resin, polyester resin, chlorinated rubber resin, and vinyl resin can be mentioned.

The other resin (E) in the composition of the present invention can be contained in a range which does not deteriorate adequate film dissolution speed and film property in seawater. Such content is preferably 1 to 200 parts by mass, more preferably 20 to 100 parts by mass with respect to 100 parts by mass of the polyester urethane (A).

### 1-6. other additives

Further, if necessary, the antifouling coating composition of the present invention can further contain pigment, dye, antifoaming agent, anti-sagging agent, dispersant, anti-settling agent, dehydrating agent, organic solvent and the like, in a range which does not deteriorate adequate film dissolution speed and film property in seawater.

### 2. manufacturing method of antifouling coating composition

The antifouling coating composition of the present invention can be manufactured by mixing and dispersing a mixture solution containing the polyester urethane resin (A), antifouling agent (B), and other additives.

Here, the polyester urethane resin (A) can be manufactured during the manufacture of the antifouling coating composition. For example, a mixture solution is prepared by the formulating polyester polyol (a) and/or polyester urethane resin (A), the isocyanate compound (b), the afore-mentioned curing catalyst as necessary, the antifouling agent (B), and other additives. The mixture solution is then mixed and dispersed using a disperser, thereby obtaining the antifouling coating composition of the present invention. Otherwise, the isocyanate compound (b) and the curing catalyst as necessary can be separately added immediately before application, that is, preparing a two-component coating. Accordingly, the polyester urethane resin (A) can be formed during drying of the coating film of the antifouling coating composition.

The content of the resin, antifouling agent and the like in the mixture solution shall be adjusted so that the content of the resin, antifouling agent and the like in the antifouling coating composition would be satisfied.

Regarding the mixture solution, the ingredients such as resin, antifouling agent and the like are preferably dissolved or dispersed in the solvent.

As the solvent for example, one or more of xylene, toluene, mineral spirit, butyl acetate, methyl isobutyl ketone, methyl ethyl ketone and the like can be mentioned.

As the disperser for example, the one which can be used as a micro-pulverizer can be suitably used. For example, a commercially available homo mixer, sand mill, bead mill and the like can be used. Furthermore, the mixed solution can be mixed and dispersed by using a stirrer-equipped container containing glass beads for mixing and dispersing.

### 3. method for antifouling treatment, antifouling coating film, and coated object

The method for antifouling treatment of the present invention is characterized in that an antifouling coating film is formed using the above-explained antifouling coating composition on the surface of an object that is subjected to coating. The method for antifouling treatment of the present invention can prevent adhesion of aquatic fouling organisms by the gradual dissolution of the surface of the antifouling coating film such that the surface of the coating film is continually renewed. After the dissolution of the coating film, the antifouling effect can be continuously exhibited by recoating the composition.

Examples of objects on which a coating film can be formed include ships (in particular, ship bottoms), fishing tools, and structures submerged in seawater. Examples of the fishing tools include fishing nets for use in aquaculture or in fixed netting, and fishing net accessories such as ropes and floats attached to fishing nets. Examples of the structures submerged in seawater include power plant aqueducts, bridges, and port facilities.

The antifouling coating film can be formed by applying the antifouling coating composition onto the surface (entirely or partially) of an object on which the coating film is to be formed. Examples of the coating method include brush coating, spray coating, dipping, flow coating, and spin coating. These coating methods can be employed singly or in combination. The coating composition is dried after the application. The drying temperature can be room temperature. The drying time can be suitably selected depending on the thickness of the coating film and the like.

The antifouling coating film produced using the above antifouling coating composition according to an embodiment of the present invention can exhibit suitable dissolving rate and properties of the coating film in seawater. In addition, the stable surface renewal property can remain constant for a long period of time and a desired antifouling effect can be effectively exerted. Also, the coating film can advantageously exert excellent recoating performance.

The thickness of the antifouling coating film can be suitably selected depending on the type of an object on which the coating film is to be formed, the navigation speed of a ship, the seawater temperature and the like. For example, when the object on which a coating film is formed is a ship bottom, the thickness of the antifouling coating film is usually 50 to 500 µm, and preferably 100 to 400 µm.

The antifouling coating film of the present invention has a suitable hardness. Specifically, the antifouling coating film of the present invention has a hardness sufficient enough to cause no coating film defects such as cold flow.

The coated object of the present invention has the antifouling coating film on its surface. The coated object of the present invention can have the antifouling coating film on the entire surface thereof or on the partial surface thereof.

The coated object of the present invention is provided with a coating film having stable long-term surface renewal property and excellent recoating performance since the suitable dissolving rate and properties of the coating film in seawater are improved. Accordingly, the coated object can be preferably applied for the above ships (in particular, ship bottoms), fishing tools, structures submerged in seawater, etc. For example, when the antifouling coating film is formed on the surface of a ship bottom, the antifouling coating film gradually dissolves from the surface, so that the coating film surface is always renewed. This prevents the adhesion of aquatic fouling organisms. Further, the hydrolysis speed of the antifouling coating film is controlled adequately. Accordingly, the ship can maintain the antifouling performance for a long period of time. For example, when the ship is in a static state such as during the anchorage period and during the rigging period, adhesion and accumulation of the aquatic fouling organisms hardly occur, thereby exhibiting antifouling effect for a long period of time.

In addition, the surface of the antifouling coating film is basically free from cracks or peeling even after a long period of time. Accordingly, it is unnecessary to completely remove the existing coating film before re-forming a new coating film. Thus, by directly recoating the antifouling coating film composition, the antifouling coating film can be effectively formed. This makes it possible to continuously maintain the antifouling performance in a simple and inexpensive manner.

### EXAMPLE

Examples and the like are provided hereinafter, and further clarifies characteristics of the present invention. The present invention, however, is not limited to these Examples.

The weight-average molecular weight (Mw) was determined by GPC (using a polystyrene standard), and GPC was performed under the following conditions.
Equipment: HLC-8220GPC (available from Tosoh Corporation)
Column: TSKgel Super HZM-M (available from Tosoh Corporation), two columns used
Flow rate: 0.35 mL/min
Detector: RI
Column thermostat temperature: 40°C
Developing solvent: THF

The non-volatile content was determined by heating for 1 hour at 125°C.

The abbreviations used in the following production examples represent the following compounds.

AA : adipic acid
SA : sebacic acid
PA : orthophthalic acid
IPA : isophthalic acid
CL : ε-caprolactone
VL : δ-valerolactone
1,4BD : 1,4-butanediol
1,3PD : 1,3-propanediol
HD : 1,6-hexanediol
NPG : neopentyl glycol
MPD : 3-methyl-1,5-pentanediol
CHDM : 1,4-cyclohexanedimethanol
PD9 : 2,4-diethyl-1,5-pentanediol
DEG : diethylene glycol
IPDI : isophorone diisocyanate
TDI : tolylene diisocyanate
ND : 1,9-nonanediol

### 1. production example

### <production example 1 (production of polyester polyol a1)>

First, 146g of AA and 131g of 1,4BD were charged to a reactor, and esterification reaction was performed by agitation under ordinary pressure at 200°C, with distillation of generated water. When generation of water decreased, 0.02g (70 ppm) of tetraisopropyltitanate was added, and the reaction was continued under reduced pressure of 200 to 100 mmHg. When the acid value reached 1.0 mg KOH/g, degree of vacuum was raised using a vacuum pump, thereby completing the reaction. The hydroxyl value of the polyester polyol obtained was 113.7 mg KOH/g, and the acid value thereof was 0.2 mg KOH/g, and Mw (measured by GPC) was 3000. Hereinafter, the polyester polyol obtained is abbreviated as polyester polyol a1. Here, the acid value is a value measured in accordance with Standard Methods for the Analysis of Fats, Oils and Related Materials 2.3.1-2013, established by Japan Oil Chemists' Society, and the hydroxyl value is a value measured in accordance with Standard Methods for the Analysis of Fats, Oils and Related Materials 2.3.6.2-1996, established by Japan Oil Chemists' Society.

### <production examples 2 to 7, 9 to 14 (production of polyester polyols a2 to a7, a9 to a14)>

Acid components and polyalcohols shown in Table 1 were used, and the amount of the material charged was arbitrarily adjusted. The rest of the production conditions were the same as the production example 1. Accordingly, esterification reactions were performed to obtain corresponding polyester polyols. Hereinafter, each of the polyester polyols obtained in production examples 2 to 7 and 9 to 14 are abbreviated as polyester polyols a2 to a7 and a9 to a14, respectively. The result of analysis conducted for the properties of the obtained polyester polyols are shown in Table 1.

### <production example 8 (production of polyester polyol a8)>

First, 159.6g of CL, 60g of VL, 26g of NPG, and 0.01g of tetrabutyl titanate were charged to a reactor, and reaction was performed at 170°C for 4 hours. The hydroxyl value of the obtained polyester polyol was 110.2 mg KOH/g, and the acid value thereof was 0.05 mg KOH/g, Mw (measured by GPC) thereof was 3000. Hereinafter, the polyester polyol obtained is abbreviated as polyester polyol a8.

### <production example 15 (production of polyester polyol a15)>

Lactone component and polyalcohol shown in Table 1 were used, and the amount of the material charged was arbitrarily adjusted. The rest of the production conditions were the same as the production example 8. Accordingly, esterification reaction was performed to obtain the polyester polyol. Hereinafter, the polyester polyol obtained in production example 15 is abbreviated as polyester polyol a15. The result of analysis conducted for the properties of the polyester polyol a15 are shown in Table 1.

### [Table 1]

**Table 1**

| production example | polyester polyol | acid component or lactone compound | polyalcohol | hydroxyl value (mg· KOH/g) | acid value (mg· KOH/g) | Mw (measured by GPC) |
|---|---|---|---|---|---|---|
| 1 | a1 | AA | 1,4BD | 113.7 | 0.20 | 3000 |
| 2 | a2 | SA | 1,3PD | 114.7 | 0.18 | 3400 |
| 3 | a3 | AA | HD(70), NPG(30) | 56.4 | 0.12 | 6400 |
| 4 | a4 | AA | MPD | 57.1 | 0.25 | 6000 |
| 5 | a5 | AA(80), PA(20) | 1,4BD | 112.0 | 0.21 | 3500 |
| 6 | a6 | SA(80), IPA(20) | 1,3PD | 113.0 | 0.15 | 3100 |
| 7 | a7 | AA | 1,4BD(70), CHDM(30) | 111.5 | 0.11 | 3600 |
| 8 | a8 | CL(70), VL(30) | NPG | 110.2 | 0.05 | 3000 |
| 9 | a9 | AA | PD9 | 56.0 | 0.05 | 5300 |
| 10 | a10 | PA | HD | 53.3 | 0.07 | 4300 |
| 11 | a11 | PA | PD9 | 52.6 | 1.10 | 4000 |
| 12 | a12 | PA | NPG | 37.9 | 0.30 | 5000 |
| 13 | a13 | IPA | DEG | 20.0 | 0.30 | 16000 |
| 14 | a14 | AA | ND | 113.7 | 0.07 | 4000 |
| 15 | a15 | CL | NPG | 112.9 | 0.08 | 2900 |

| | | | | | | |
|---|---|---|---|---|---|---|
| note : value in parenthesis show mixing ratio by molar ratio | | | | | | |

### <production example A1 (production of polyester urethane solution A1) >

First, 80.6g of polyester polyol 1 and 14.5g of IPDI (isocyanate index : 0.8) were charged to a reactor, and urethanization reaction was performed under nitrogen atmosphere at 80 to 90°C with agitation. After 1 hour, 0.02g of dibutyl tin dilaurate was added, and the temperature was gradually raised. When the temperature was in the range of 100 to 105°C, 5g of toluene was added to ease viscosity increase, and the reaction was further continued for 4 hours. Subsequently, the reaction mixture was cooled and toluene was added so that the heating residue would be 50%, thereby dissolving the polyester urethane. The heating residue of the polyester urethane solution thus obtained was 50.0%, and Mw (measured by GPC) was 17000. The polyester urethane solution thus obtained is abbreviated as polyester urethane solution A1.

### <production examples A2 to A13 (production of polyester urethane solutions A2 to A13)>

Polyester polyols and isocyanate compounds shown in Table 2 were used, and the amount of the material charged was arbitrarily adjusted in accordance with the predetermined isocyanate index, and the amount of toluene added during the reaction was adjusted within the range of 5 to 10g. The rest of the production conditions were the same as the production example A1. Accordingly, polyester urethane solutions were obtained. Hereinafter, each of the polyester urethane solutions obtained in production examples A2 to A13 are abbreviated as polyester urethane solutions A2 to A13, respectively. The result of analysis conducted for the polyester urethane solutions thus obtained are shown in Table 2.

### [Table 2]

**Table 2**

| production example | polyester urethane solution | composition | | | analysis result of polyester urethane solution | |
|---|---|---|---|---|---|---|
| | | polyester polyol | isocyanate compound | isocyanate index | heating residue (%) | Mw (measured bv GPC) |
| A1 | A1 | a1 (80.6) | IPDI(14.5) | 0.80 | 50.0 | 17000 |
| A2 | A2 | a2(81.3) | TDI(11.6) | 0.80 | 50.5 | 17000 |
| A3 | A3 | a3(87.5) | TDI(6.1) | 0.80 | 50.2 | 29000 |
| A4 | A4 | a4(90.9) | TDI(6.9) | 0.85 | 49.5 | 37000 |
| A5 | A5 | a5(81.0) | IPDI(16.2) | 0.90 | 49.8 | 29000 |
| A6 | A6 | a6(80.3) | TDI(12.0) | 0.85 | 50.0 | 22000 |
| A7 | A7 | a7(80.5) | IPDI(16.0) | 0.90 | 50.2 | 28000 |
| A8 | A8 | a8(80.2) | IPDI(16.2) | 0.90 | 50.1 | 29000 |
| A9 | A9 | a9(90.2) | TDI(6.7) | 0.85 | 50.5 | 39000 |
| A10 | A10 | a10(90.6) | TDI(6.0) | 0.80 | 49.8 | 30000 |
| A11 | A11 | a11(89.9) | TDI(5.9) | 0.80 | 49.9 | 29000 |
| A12 | A12 | a14(85.8) | TDI(13.6) | 0.90 | 51.0 | 42300 |
| A13 | A13 | a15(84.9) | TDI(13.7) | 0.92 | 50.4 | 47900 |

| | | | | | | |
|---|---|---|---|---|---|---|
| note : value in parenthesis show amount charged (g). | | | | | | |

### 2. Examples

### <Examples 1 to 10 and Comparative Examples 1 to 7 (production of coating composition)>

First, 28g of polyester urethane solution A1, 3g of gum rosin solution, 45g of cuprous oxide, 2g of copper pyrithione, 2g of red iron oxide, 2g of talc, 6g of zinc oxide, 1g of titanium oxide, 2g of aliphatic amide, and 9g of xylene were formulated. The formulation was mixed and dispersed with glass beads having a diameter of 1.5 to 2.5 mm, thereby producing a coating composition (Example 1).

In Examples 2 to 8, polyester urethane solution A1 in Example 1 was replaced with each of the polyester urethane solutions A2 to A8, respectively. In Examples 9 to 10, polyester urethane solution A1 in Example 1 was replaced with each of the polyester urethane solutions A12 to A13, respectively. In Comparative Examples 1 to 3, polyester urethane solution A1 in Example 1 was replaced with each of the polyester urethane solutions A9 to A11, respectively. In Comparative Examples 4 to 7, polyester urethane solution A1 in Example 1 was replaced with each of the 50% toluene solutions of polyester polyols a1, a2, and a12 and 50% solvent mixture (methyl ethyl ketone : toluene = 4:1) solution of polyester polyol a13, respectively. The rest of the production conditions were the same as Example 1, thereby obtaining each of the coating compositions.

Details of each of the components are as follows.
gum rosin solution : xylene solution (approximately 60% solids) of Chinese gum rosin (WW)
cuprous oxide : "NC-301" (product name, available from NISSIN CHEMCO LTD.)
copper pyrithione : "copper Omadine" (product name, available from Arch Chemical, Inc.)
red oxide : "TODA COLOR EP-13D" (product name, available from TODA PIGMENT CORP.)
talc : "CROWN TALC 3S" (product name, available from matsumura sangyo Co., Ltd.)
zinc oxide : "zinc oxide II" (product name, available from Seido Chemical Industry Co., Ltd.)
titanium oxide : "FR-41" (product name, available from FURUKAWA CO., LTD.)
aliphatic acid amide thixotropic agent : "DISPARLON A603-20X" (product name, available from Kusumoto Chemicals, Ltd.)

### 3. test example

### <test example 1 (rotary test)>

A tank was provided, in the center thereof, with a rotating drum having a diameter of 515 mm and a height of 440 mm to allow the rotation of the drum by a motor. The tank was also provided with a cooling apparatus for keeping the temperature of seawater constant, and an automatic pH controller for keeping the pH of the seawater constant.

Test plates were prepared for each coating composition in accordance with the following method. First, an anti-corrosive coating film was formed by applying an anti-corrosive coating material (an epoxy vinyl-based A/C) onto a titanium plate (75 x 150 x 0.5 mm) such that the thickness after drying would be about 100 µm, followed by drying. Each of the antifouling coating compositions obtained in Examples and Comparative Examples was applied onto the anti-corrosive coating film so that the thickness after drying would be about 300 µm. The applied coating was dried for 3 days at 40°C, and the test plate having the dry coating film with a thickness of about 300 µm was prepared.

One of the thus-prepared test plates was secured to the rotating drum of the rotary apparatus of the above-mentioned equipment and was made to contact the seawater, and the rotating drum was rotated at a speed of 20 knots. During the test, the seawater temperature was maintained at 25°C and the pH at 8.0 to 8.2; and the seawater was replaced once every week.

The initial thickness of the coating film and the remaining thickness of the coating film as measured every 3 months from the beginning of the test were determined using a laser focus displacement meter for each test plate, and the thickness of the dissolved coating film was calculated from the difference therebetween to give the dissolving amount of the coating film per month (µm/month). The measurement was conducted for 24 months, and the dissolving amount of the coating film was calculated every 6 months.

After the rotary test was completed (after 24 months), the test plate was dried, and the surface of each coating film was visually inspected to evaluate the state of the coating film.

The state was evaluated as follows.
A: No defects observed.
B: Hairline cracks are slightly observed.
C: Hairline cracks are observed on the entire surface of the coating film.
D: Coating film defects such as large cracks, blisters or peel-offs are observed.

### <test example 2 (antifouling test)>

Each of the coating compositions obtained in Examples and Comparative Examples was applied onto both surfaces of a hard vinyl chloride plate (100 x 200 x 2 mm) such that the thickness of a dry coating film would be about 200 µm. The applied coating was dried for 3 days at room temperature (25°C), and the test plate having the dry coating film with a thickness of about 200 µm was prepared. This test plate was immersed at 1.5 m below sea level in Owase City, Mie Prefecture, Japan, and the test plate fouling due to attached objects was examined after 12 months and 24 months.

The state of the surface of the coating film was visually evaluated in accordance with criteria shown below.
A: Fouling organisms such as shellfish or algae do not attach, and slime hardly attaches.
B: Fouling organisms such as shellfish or algae do not attach, and slime thinly attaches (to the extent that the coating film surface is observable) and the slime can be removed when wiped softly with a brush.
C: Fouling organisms such as shellfish or algae do not attach, but slime thickly attaches (to the extent that the coating film surface is not observable) and the slime cannot be removed even when wiped strongly with a brush.
D: Fouling organisms such as shellfish or algae do attach.

Results are shown in Table 3.

**[Table 3]**

| Table 3 | | | Examples | | | | | | | | | | Comparative Examples | | | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 1 | 2 | 3 | 4 | 5 | 6 | 7 |
| test 1 rotary test | average dissolving amount of coating film | initial to after 6 months | 2.2 | 3.0 | 2.5 | 1.6 | 1.5 | 2.6 | 1.6 | 1.2 | 2.0 | 1.8 | 0.3 | 0.1 | 2.1 | 0.3 | 0.2 | 0.6 | 3.5 |
| | | after 6 to 12 months | 2.5 | 3.5 | 2.8 | 2.0 | 1.7 | 2.8 | 1.8 | 1.5 | 2.0 | 2.1 | 0.0 | 0.0 | -0.1 | -0.2 | -0.1 | 0.0 | 1.2 |
| | | after 12 to 18 months | 2.6 | 4.3 | 3.0 | 2.1 | 2.0 | 3.1 | 1.9 | 1.4 | 2.5 | 2.5 | 0.0 | 0.0 | 0.0 | 0.0 | 0.0 | 0.0 | 0.1 |
| | ( *µ* m/month) | after 18 to 24 months | 2.4 | 4.0 | 3.2 | 2.3 | 2.1 | 3.2 | 2.2 | 1.5 | 3.0 | 2.8 | 0.0 | 0.0 | 0.0 | 0.0 | 0.0 | 0.0 | 0.0 |
| | condition of film after 24 months | | A | A | A | A | A | A | A | A | A | A | A | B | C | D | D | A | D |
| test 2 antifouling test | after 12 months | | A | A | A | A | A | A | A | A | A | A | D | D | D | D | D | D | B |
| | after 24 months | | B | B | B | B | B | B | B | B | B | B | D | D | D | D | D | D | D |

From Table 3, it can be seen that the coating film formed by using the coating composition of the present invention (Examples 1 to 10) can maintain stable dissolution amount in seawater in all of the time periods when compared with the coating film formed by using the coating composition of Comparative Examples 1 to 7. Further, condition of the dried coating film formed by using the coating composition of the present invention after the rotary test (after 24 months) was generally satisfactory, giving no cracks. It can also be understood that fouling organisms such as shellfish or algae did not attach, and slime hardly attached.

On the other hand, in the coating film formed by using the coating composition of Comparative Examples 1 to 7, some hardly showed any dissolution in seawater, some showed only initial dissolution, and some gave cracks in the coating film. In addition, in the antifouling test, long-term prevention of the adhesion of fouling organisms could not be achieved, and thus balance of the performance cannot be achieved.

## Claims

1. An antifouling coating composition comprising:
a polyester urethane resin (A); and
an antifouling agent (B); wherein:
the polyester urethane resin (A) is a product obtained by urethanization reaction of a polyester polyol (a) and an isocyanate compound (b); and
the polyester polyol (a) is represented by a formula (1) or a formula (2). 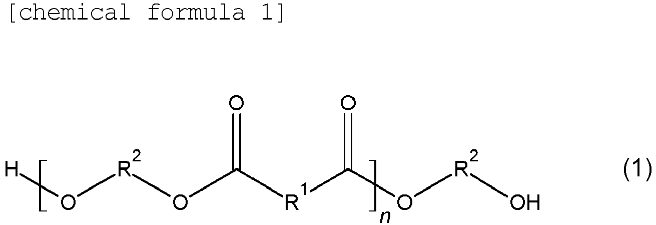
(wherein, n represents an integer of 1 to 100, R¹ provided by number of n is the same as or different from each other, and a part of or all of R¹ provided by number of n is a linear alkylene group or a branched alkylene group being branched at a position other than α-position and β-position; and R² provided by number of (n+1) is the same as or different from each other, and a part of or all of R² provided by number of (n+1) is a linear alkylene group or a branched alkylene group being branched at a position other than α-position and β-position) 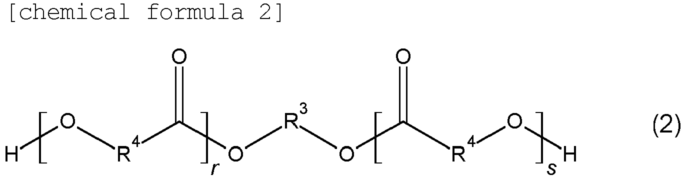
(wherein, r and s are each an integer of 0 to 100, formula of r+s ≥ 1 is satisfied, R⁴ provided by number of (r+s) is the same as or different from each other, R³ is an alkylene group, R⁴ is a linear alkylene group or a branched alkylene group being branched at a position other than α-position and β-position)

2. The antifouling coating composition of Claim 1, wherein the polyester polyol (a) of the formula (1) is a product obtained by esterification reaction or ester exchange reaction of acid component comprising dicarboxylic acid represented by a formula (3) or derivatives thereof and polyalcohol comprising diol compound represented by a formula (4).
HOOC-R¹-COOH (3)
HO-R²-OH (4)

3. The antifouling coating composition of Claim 1, wherein the polyester polyol (a) of the formula (2) is a product obtained by ring-opening polymerization reaction of lactone compound selected from the group consisting of *ε*-caprolactone, δ-valerolactone, γ-butyrolactone, β-propiolactone, and α-acetolactone, using polyalcohol comprising diol compound represented by a formula (5). HO-R³-OH (5)

4. A coated object having on a surface thereof an antifouling coating film formed by using the antifouling coating composition of any one of Claims 1 to 3.

## Patentansprüche

1. Bewuchshemmende Beschichtungszusammensetzung, umfassend:
ein Polyesterurethanharz (A); und
ein bewuchshemmendes Mittel (B); wobei:
das Polyesterurethanharz (A) ein Produkt, erhalten durch eine Urethanisierungsreaktion eines Polyesterpolyols (a) und einer Isocyanatverbindung (b), ist; und
das Polyesterpolyol (a) durch eine Formel (1) oder eine Formel (2) dargestellt ist. 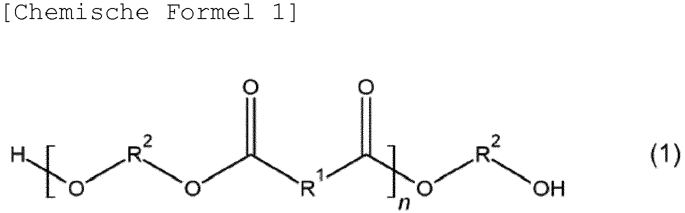
(wobei n eine ganze Zahl von 1 bis 100 bedeutet, R¹, vorgesehen in einer Anzahl von n, gleich ist oder sich voneinander unterscheidet, und ein Teil der oder alle R¹, vorgesehen in einer Anzahl von n, eine lineare Alkylengruppe oder eine verzweigte Alkylengruppe, die an einer anderen Position als der α-Position und der β-Position verzweigt ist, ist; und R², vorgesehen in einer Anzahl von (n + 1), gleich ist oder sich voneinander unterscheidet, und ein Teil der oder alle R², vorgesehen in einer Anzahl von (n + 1), eine lineare Alkylengruppe oder eine verzweigte Alkylengruppe, die an einer anderen Position als der α-Position und der β-Position verzweigt ist, ist) 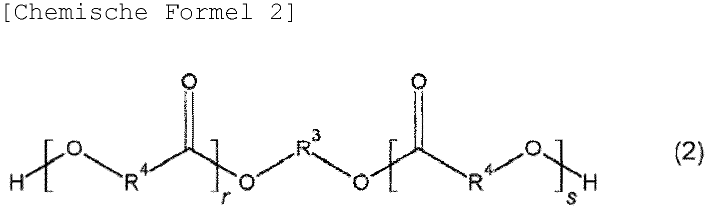
(wobei r und s jeweils eine ganze Zahl von 0 bis 100 sind, Formel r + s ≥ 1 erfüllt ist, R⁴, vorgesehen in einer Anzahl von (r + s), gleich ist oder sich voneinander unterscheidet, R³ eine Alkylengruppe ist, R⁴ eine lineare Alkylengruppe oder eine verzweigte Alkylengruppe, die an einer anderen Position als der α-Position und der β-Position verzweigt ist, ist)

2. Bewuchshemmende Beschichtungszusammensetzung nach Anspruch 1, wobei das Polyesterpolyol (a) der Formel (1) ein Produkt, erhalten durch eine Veresterungsreaktion oder eine Esteraustauschreaktion einer Säurekomponente, umfassend eine durch eine Formel (3) dargestellte Dicarbonsäure oder Derivate davon, und eines Polyalkohols, umfassend eine durch eine Formel (4) dargestellte Diolverbindung, ist.
HOOC-R¹-COOH (3)
HO-R²-OH (4)

3. Bewuchshemmende Beschichtungszusammensetzung nach Anspruch 1, wobei das Polyesterpolyol (a) der Formel (2) ein Produkt, erhalten durch eine Ringöffnungspolymerisationsreaktion einer Lactonverbindung, ausgewählt aus der Gruppe bestehend aus *ε*-Caprolacton, δ-Valerolacton, γ-Butyrolacton, β-Propiolacton und α-Acetolacton, unter Verwendung eines Polyalkohols, umfassend eine durch eine Formel (5) dargestellte Diolverbindung, ist.
HO-R³-OH (5)

4. Beschichteter Gegenstand, aufweisend auf einer Oberfläche davon einen bewuchshemmenden Beschichtungsfilm, gebildet durch Verwendung der bewuchshemmende Beschichtungszusammensetzung nach einem der Ansprüche 1 bis 3.

## Revendications

1. Composition de revêtement antisalissure comprenant :
une résine de polyester uréthane (A) ; et
un agent antisalissure (B) ; dans laquelle :
la résine de polyester uréthane (A) est un produit obtenu par réaction d'uréthanisation d'un polyester polyol (a) et d'un composé d'isocyanate (b) ; et
le polyester polyol (a) est représenté par une formule (1) ou une formule (2). 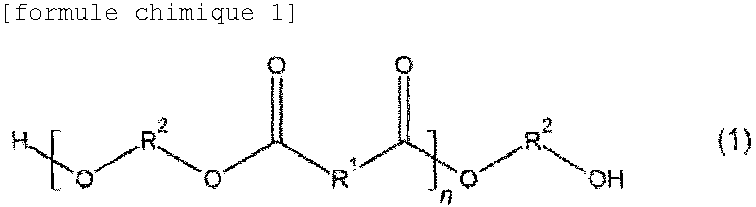
(dans laquelle, n représente un entier de 1 à 100, les R¹ fournis par le nombre de n sont identiques ou différents les uns des autres, et une partie des ou tous les R¹ fournis par le nombre de n sont un groupe alkylène linéaire ou un groupe alkylène ramifié qui est ramifié à une position autre que la position α et la position β ; et les R² fournis par le nombre de (n+1) sont identiques ou différents les uns des autres, et une partie des ou tous les R² fournis par le nombre de (n+1) sont un groupe alkylène linéaire ou un groupe alkylène ramifié qui est ramifié à une position autre que la position α et la position β) 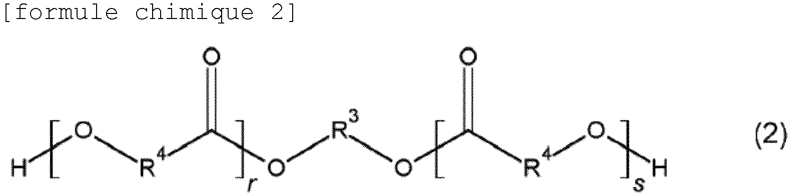
(dans laquelle r et s sont chacun un entier de 0 à 100, la formule de r+s ≥ 1 est satisfaite, les R⁴ fournis par le nombre de (r+s) sont identiques ou différents les uns des autres, R³ est un groupe alkylène, R⁴ est un groupe alkylène linéaire ou un groupe alkylène ramifié qui est ramifié à une position autre que la position α et la position β)

2. Composition de revêtement antisalissure de la revendication 1, dans laquelle le polyester polyol (a) de la formule (1) est un produit obtenu par réaction d'estérification ou réaction d'échange d'ester d'un composant acide comprenant un acide dicarboxylique représenté par une formule (3) ou des dérivés de celui-ci et un polyalcool comprenant un composé de diol représenté par une formule (4).
HOOC-R¹-COOH (3)
HO-R²-OH (4)

3. Composition de revêtement antisalissure de la revendication 1, dans laquelle le polyester polyol (a) de la formule (2) est un produit obtenu par réaction de polymérisation par ouverture de cycle d'un composé de lactone sélectionné dans le groupe constitué par l'ε-caprolactone, la δ-valérolactone, la γ-butyrolactone, la β-propiolactone et l'a-acétolactone, en utilisant un polyalcool comprenant un composé de diol représenté par une formule (5).
HO-R³-OH (5)

4. Objet revêtu ayant sur une surface de celui-ci un film de revêtement antisalissure formé en utilisant la composition de revêtement antisalissure de l'une quelconque des revendications 1 à 3.
